# EUROPEAN PATENT SPECIFICATION

(11) **EP 2 871 818 B1**
(45) Date of publication and mention of the grant of the patent: **17.04.2019**
(21) Application number: 14191635.3
(22) Date of filing: 04.11.2014
(51) Int. Cl.: H04L 29/08, G06F 9/445

(54) **Communication apparatus, communication system, communication method, and recording medium**
Kommunikationsvorrichtung, Kommunikationssystem, Kommunikationsverfahren und Aufzeichnungsverfahren
Appareil, système et procédé de communication et support d'enregistrement

(30) Priority: 12.11.2013 JP 2013233765
(43) Date of publication of application: 13.05.2015
(73) Proprietor: Ricoh Company, Ltd., Tokyo 143-8555 (JP)
(72) Inventor: Nakamura, Shigeru, Tokyo 143-8555 (JP)
(74) Representative: SSM Sandmair

(56) References cited:
- EP-A2- 0 811 942
- US-A1- 2010 095 293
- US-A1- 2010 169 876

## Description

### BACKGROUND OF THE INVENTION

### 1. Field of the Invention

The disclosures discussed herein relate to a communication apparatus, a communication system, a communication method, and a non-transitory recording medium storing a communication program.

### 2. Description of the Related Art

In the communication systems such as a teleconferencing system, firmware (programs) may be updated on a regular basis to improve confidentiality of phone communications and operational performances. There is disclosed in the related art communication systems a technique to update the programs by accessing a server to acquire update data and meta-information via a network (e.g., Patent Document 1). In such related art communication systems, the update data may generally be downloaded after the date at which the programs are allowed to start being updated.

Further, there is disclosed a technique to prevent saturated communications of traffic lines due to concentrated accesses resulting from a large number of download requests. In this technique, a client apparatus is provided with an inactivated content file before a predetermined set time, and is subsequently provided with information necessary for activating the content file to function after the predetermined set time (e.g., Patent Document 2).

However, in the related art update systems, a defect may be found in the update data after a telephone terminal completes downloading the update data and before the date at which the phone terminal is allowed to start updating. The telephone terminal is unable to replace previously downloaded update data having a defect with corrected update data. Hence, a server that manages the update data needs to manage the corrected update data as a different version. As a result, the telephone terminal needs to download the update data and execute an update of the downloaded the update data a large number of times until an update of the corrected update data is executed. Further, when a conference system is used before completing the downloading of the corrected update data, the telephone terminal may exhibit malfunctioning due to the update data having the defect.

### RELATED ART DOCUMENTS

### PATENT DOCUMENTS

Patent Document 1: Japanese Laid-open Patent Publication No. 2012-84118
Patent Document 2: Japanese Laid-open Patent Publication No. 2011-193264

EP 0 881 942 A2 discloses a system and method for updating client computers which comprise a functionality for determining the software updates that are relevant to a user computer according to the software products installed on the user computer. US 2010/0169876 A1 discloses a method for automatically updating an existing firmware file stored in the memory of an intelligent electronic device communicatively coupled to a network in which an update having the desired version is automatically downloaded.

### SUMMARY OF THE INVENTION

Accordingly, it is a general object in one embodiment of the present invention to provide a communication apparatus, a communication system, and a communication method, and a non-transitory recording medium having a program capable of reacquiring update data that substantially obviates one or more problems caused by the limitations and disadvantages of the related art.

In one aspect of the embodiment, there is provided a communication apparatus operable to perform communications via a data transmission path. The communication apparatus includes a receiver configured to receive meta-information having statements associated with an update; a determination part configured to determine whether update data are changed based on the meta-information received by the receiver when the update data have already been downloaded; an acquisition part configured to download, when the determination part determines that the update data are changed, the changed update data; and an update processor configured to execute the update based on the changed update data downloaded by the acquisition part.

Other objects, features and advantages of the present invention will become more apparent from the following detailed description when read in conjunction with the accompanying drawings.

### BRIEF DESCRIPTION OF THE DRAWINGS

FIG. 1 is a schematic diagram illustrating a configuration example of a communication system of an embodiment;
FIG. 2 is a block diagram illustrating a hardware configuration example of a phone terminal;
FIG. 3 is a block diagram illustrating a hardware configuration example of a relay apparatus, a communication management server, and an update server;
FIG. 4 is a block diagram illustrating a functional configuration example of the phone terminal and the update server of the embodiment;
FIG. 5 is a flowchart illustrating an example of operations of the phone terminal of the embodiment;
FIG. 6 is a flowchart illustrating a pre-download process of an embodiment;
FIG. 7 is a schematic diagram illustrating an example of metadata;
FIG. 8 is a schematic diagram illustrating an example of a start screen;
FIG. 9 is a schematic diagram illustrating an example of a setting screen;
FIG. 10 is a schematic diagram illustrating an example of a verification screen;
FIG. 11 is a diagram illustrating an example of a verification window;
FIG. 12 is a flowchart illustrating an example of an update process of an embodiment;
FIG. 13 is a schematic diagram illustrating an example of an update screen; and
FIG. 14 is a schematic diagram illustrating an example of a verification screen.

### DETAILED DESCRIPTION OF THE PREFERRED EMBODIMENTS

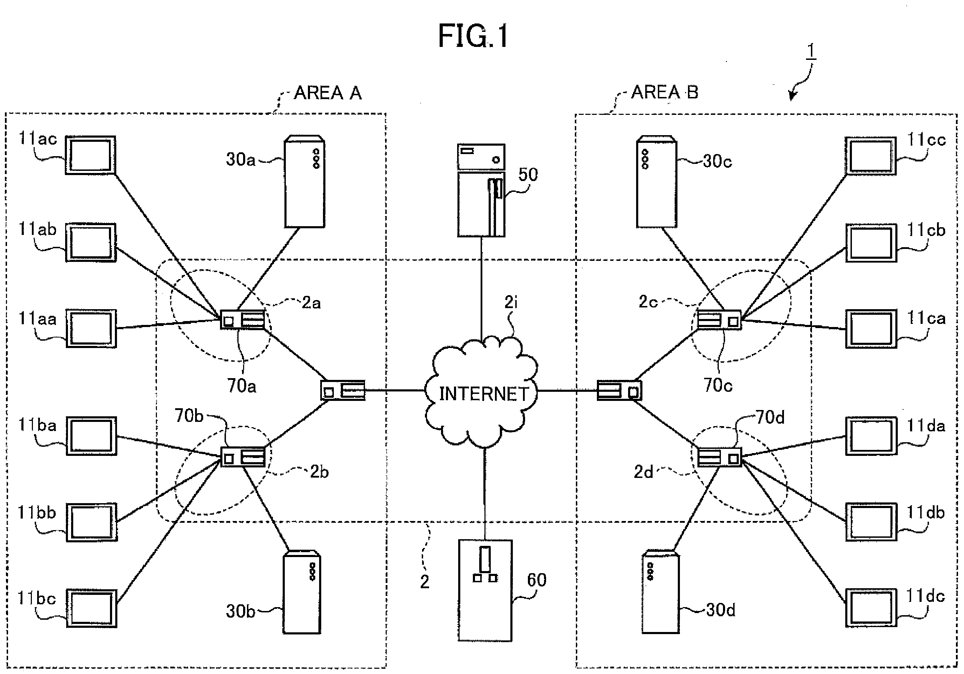

FIG. 1 is a schematic diagram illustrating a communication system 1 of a first embodiment. The communication system 1 includes phone terminals 11aa to 11ac, 11ba to 11bc, 11ca to 11cc, and 11da to 11dc; relay apparatuses 30a to 30d, a communication management server 50, an update server 60, and routers 70a to 70d, which are connected via a network 2. Specifically, the communication system 1 is configured to include LANs 2a, 2b, 2c, and 2d connected to the Internet 2i via the routers 70a to 70d, the communication management server 50 and the update server 60 connected to the Internet 2i, the phone terminals 11aa to 11ac and the relay apparatus 30a connected to the LAN 2a, the phone terminals 11ba to 11bc and the relay apparatus 30b connected to the LAN 2b, the phone terminals 11ca to 11cc and the relay apparatus 30c connected to the LAN 2c, and the phone terminals 11da to 11dc and the relay apparatus 30d connected to the LAN 2d. In the communication system 1, the phone terminals 11aa to 11ac and 11ba to 11bc in an area A communicate with the phone terminals 11ca to 11cc and 11da to 11dc in an area B by mutually transmitting and receiving data including at least one of sound and video (images) via the relay apparatuses 30a, 30b, 30c, and 30d, under the management of the communication management server 50.

Specifically, the communication management server 50 is configured to manage communication addresses of the phone terminals 11aa to 11ac, 11ba to 11bc, 11ca to 11cc, and 11da to 11dc, and communication addresses of the relay apparatuses 30a, 30b, 30c, and 30d, the phone terminals to which the relay apparatuses 30a, 30b, 30c, and 30d relay data, and calling statuses of the phone terminals. For example, in a case where the phone terminal 11aa makes a phone call to the phone terminal 11ca, the phone terminal 11aa requests the relay apparatus 30a to relay the phone call to the phone terminal 11ca. The relay apparatus 30a reports (sends) the phone call started by the phone terminal 11aa to the communication management server 50, and acquires a communication address of the relay apparatus 30c for relaying the phone call to the phone terminal 11ca. Subsequently, the relay apparatus 30a requests the relay apparatus 30c to relay the phone call to the phone terminal 11ca, and the relay apparatus 30c starts a communication session with the phone terminal 11ca. Subsequently, the relay apparatus 30c reports the start of the communication session with the phone terminal 11ca to the communication management server 50.

Hence, the communication between the phone terminal 11aa and the phone terminal 11ca has started via the relay apparatuses 30a and 30c. Further, the communication management server 50 is configured to manage a telephone call status such as an engaged status of the telephone call between the phone terminals 11aa and 11ca. For example, when the communication management server 50 receives an inquiry about the telephone call status of the phone terminal 11aa or 11ca from the phone terminal 11ab, the communication management server 50 transmits a reply indicating that the phone terminal 11aa or 11ca is online but the phone terminals 11aa and 11ca are mutually engaged in receiving their telephone calls.

In the following description, any of apparatuses of the same type are provided with the same reference numbers; however, alphabetical subscript characters subsequent to the reference numbers are omitted. For example, the phone terminals 11aa to 11ac, 11ba to 11bc, 11ca to 11cc, and 11da to 11dc are abbreviated as the phone terminal 11. Likewise, the relay apparatuses 30a to 30d are abbreviated as the relay apparatus 30.

The update server 60 is configured to manage information associated with updates of programs of the phone terminal 11 and various types of setting information of the phone terminal 11, and provide such information in response to a request from the phone terminal 11. Examples of the information associated with updates include data files of all versions from the earlier versions to the latest versions of the programs of the phone terminal 11 and various types of setting information of the phone terminal 11, and metadata (meta-information) describing update contents for each of the versions. The update server 60 manages all the versions of the data files as the information associated with updates because each of the phone terminals updates its information and the like at a different time.

Specifically, the phone terminals frequently updating the information or the like may need updating of only the latest version of the information. However, those rarely updating information or the like may need to go far back to the earlier versions on which the latest version has dependency to update all the earlier versions on which the latest version has dependency in addition to updating the latest version. Hence, since there are phone terminals that need updating not only the latest version but also the versions on which the latest version has dependency, the update server 60 manages all the versions of the information or the like as the information associated with updates.

There are two types of updates, namely, a normal update and a forced update. The normal update is aimed at eliminating an error such as a bug from the phone terminal or adding a function to the phone terminal. On the other hand, the forced update is aimed at updating the information necessary according to a change in functions of other apparatuses or functions of the phone terminal itself. For example, there is a case where data formats or video codecs for transmitting or receiving sound and images are changed, and a version of the relay apparatus 30 associated with a video such as an encoder update may be updated due to such changes. Further, a communication protocol with the relay apparatus 30 may be changed. The above changes may change structures of the sound, images, and videos themselves, or the change in the communication protocol may change a communication procedure itself with the relay apparatus 30, or functions of the relay apparatus 30. Hence, the phone terminal 11 before being updated is not able to perform a primary function of calling. In such a case, a forced update may be run on the phone terminal 11 to be adapted to the updated version of the relay apparatus 30.

Further, in a case where there is a security problem such as a security hole found in the relay apparatus 30, an update for eliminating a vulnerability due to the security hole may be run on the relay apparatus 30. In the above case, the phone terminal 11 before being updated is not able to perform calling. Hence, a forced update may be run on the phone terminal 11 so as to be adapted to countermeasures against the vulnerability due to the security hole in the relay apparatus 30.

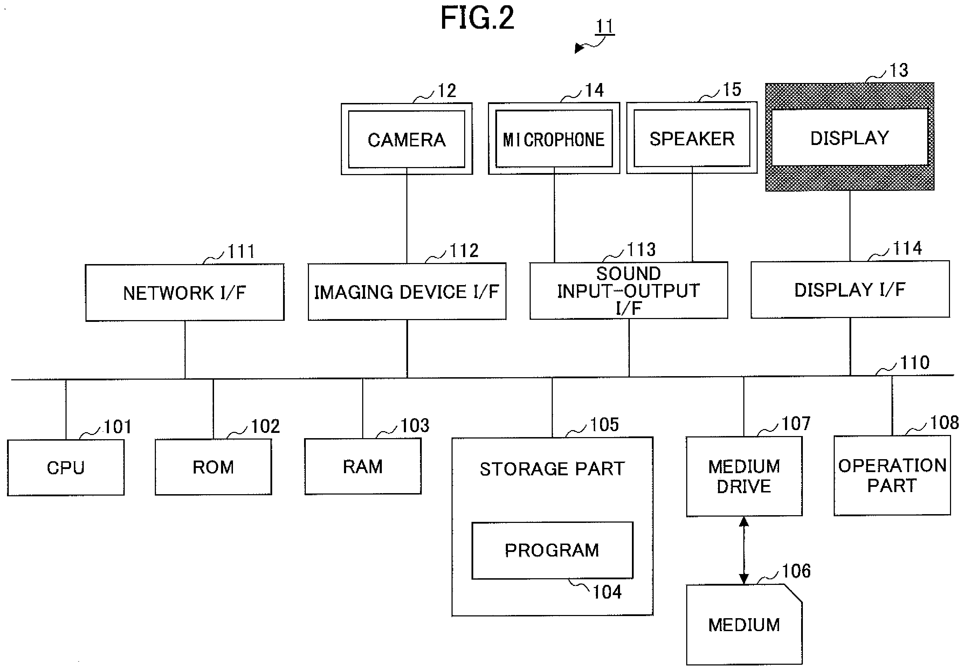

Next, a description is given of a hardware configuration of the phone terminal 11. FIG. 2 is a block diagram illustrating the hardware configuration of the phone terminal 11. As illustrated in FIG. 2, the phone terminal 11 is configured to include a central processing unit (CPU) 101, a read only memory (ROM) 102, a random access memory (RAM) 103, a storage part 105, a medium drive 107, an operation part 108, a network I/F 111, an imaging device I/F 112, a sound input-output I/F 113, and a display I/F 114, which are connected to one another via a bus 110.

The CPU 101 is configured to centrally control operations of the phone terminal 11 by loading programs 104 stored in the ROM 102 or the storage part 105 in the RAM 103, and sequentially executing the loaded programs. The storage part 105 may be a hard disk drive (HDD), and a solid state drive (SDD), and is configured to store data to be readable/writable. Specifically, the storage part 105 stores the programs 104 to be executed by the CPU 101, or various types of setting information. When the phone terminal 11 is updated, the programs 104 or various types of setting information stored in the storage part 105 are updated.

The medium drive 107 is a drive device configured to read or write in a medium 106 such as an optical disk. The operation part 108 includes a keyboard, various types of keys, a touch panel stacked on a display 13, and the like, and is configured to receive user's operational inputs. The network I/F 111 is an interface connected to a communication network 2 and configured to perform data communications via the communication network 2. The imaging device I/F 112 is an interface connected to a camera (digital still camera) 12 and configured to acquire an image imaged by the camera 12. The sound input-output I/F 113 is an interface connected to a microphone 14 and a speaker 15 and configured to input sound via the microphone 14 and output sound via the speaker 15. The display I/F 114 is an interface connected to the display 13 such as a liquid crystal display (LCD) and the like.

Note that the present embodiment includes the display 13; however, the present embodiment may include a display apparatus other than the display 13 such as a projector or the like.

When the phone terminal 11 is engaged in receiving a phone call from another phone terminal, the phone terminal 11 outputs the images acquired from the camera 12 or sound input via the microphone 14 to the relay apparatus 30 via the network I/F 111. Further, the phone terminal 11 outputs from the speaker sound input from the other phone terminal via the network I/F 111 and similarly displays on the display 13 the images acquired from the other phone terminal. Accordingly, the phone terminal 11 may be able to make a phone call with the other phone terminal by exchanging the images or sound. That is, the phone terminal 11 may be able to implement a so-called teleconference with the other phone terminal. Note that the phone terminal 11 may be any communication terminal such as a general-purpose personal computer (PC), a smartphone, a mobile phone, and a tablet terminal.

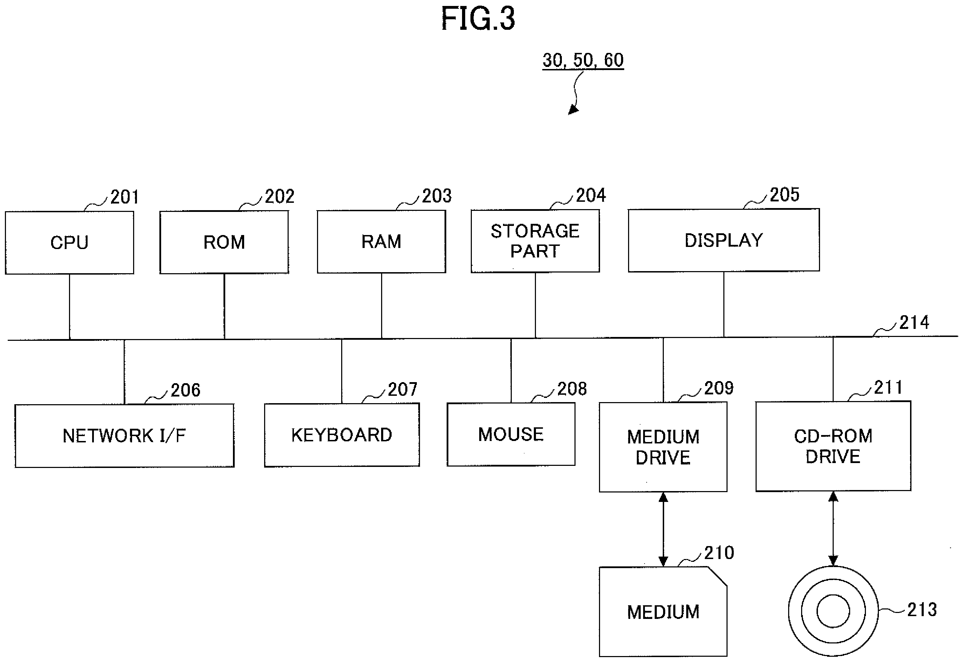

Next, an illustration is given of respective hardware configurations of the relay apparatus 30, the communication management server 50, and the update server 60. FIG. 3 is a block diagram illustrating an example of a hardware configuration of the relay apparatus 30, the communication management server 50, and the update server 60. As illustrated in FIG. 3, each of the relay apparatus 30, the communication management server 50, and the update server 60 includes a CPU 201, a ROM 202, a RAM 203, a storage part 204, a display 205, a network I/F 206, a keyboard 207, a mouse 208, a medium drive 209, and a CD-ROM drive 211, which are connected to one another via a bus 214. Each of the relay apparatus 30, the communication management server 50, and the update server 60 may be an apparatus such as a so-called personal computer (PC) or a workstation (WS).

The CPU 201 is configured to centrally control operations of the own phone terminal 11 by loading programs stored in the ROM 202 or the storage part 204 in the RAM 203, and sequentially executing the loaded programs. The storage part 204 may be an HDD or an SSD, and is configured to store data to be readable or writable. For example, in the update server 60, the storage part 204 stores information associated with updates.

The display 205 may be an LCD. The network I/F 206 is an interface connected to the communication network 2 and configured to perform data communications via the communication network 2. The keyboard 207 and the mouse 208 are configured to receive user's operational inputs. The medium drive 209 is a drive device configured to read data from or write into a medium 210 such as an optical disk. The CD-ROM drive 211 is a drive device configured to read the CD-ROM 213. For example, in the update server 60, the latest information associated with updates is provided by the medium 210 or the CD-ROM 213, and the provided latest information is stored in the storage part 204.

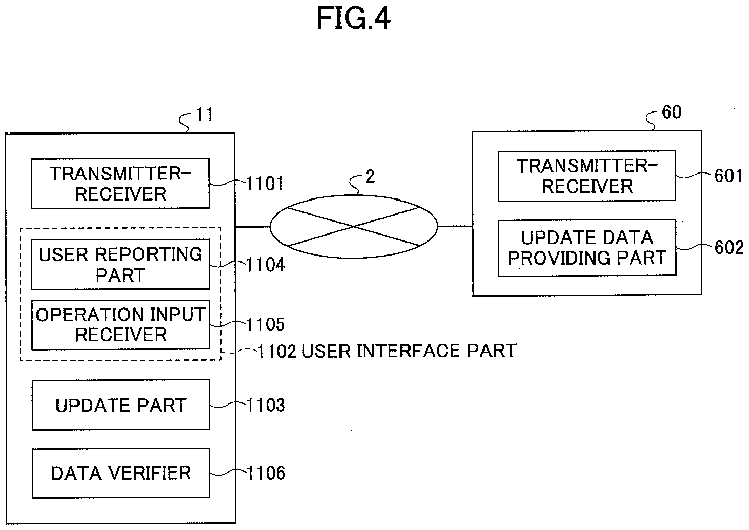

Next, an illustration is given of a functional configuration of the phone terminal 11 and the update server 60, which may be implemented by causing the CPU 101 or CPU 201 to execute programs. FIG. 4 is a block diagram illustrating an example of the functional configuration of the phone terminal 11 and the update server 60 of the present embodiment. As illustrated in FIG. 4, the phone terminal 11 mainly includes a transmitter-receiver 1101, a user interface part 1102, an update part 1103, and a data verifier 1106. The update server 60 mainly includes a transmitter-receiver 601, and an update data providing part 602. Note that part of or all of the functions of the phone terminal 11 and the update server 60 may be formed of hardware.

The transmitter-receiver 1101 is a functional part configured to transmit data to or receive data from the update server 60 via the communication network 2. Specifically, the transmitter-receiver 1101 transmits data to or receives data from the update server 60 by establishing predetermined communication sessions between the phone terminal 11 and the update server 60, using a communication address of the update server 60 stored in advance in the storage part 105, or using a communication address of the update server 60 acquired by querying the communication server 50. The data that the transmitter-receiver 1101 transmits or receives are information (e.g., metadata or update data) associated with updates managed by the update server 60.

The user interface part 1102 includes a user reporting part 1104 configured to transmit various types of reports via the speaker 15 configured to output sound or a display screen of the display 13, and an operations input receiver 1105 configured to receive user's operational inputs via the operation part 108.

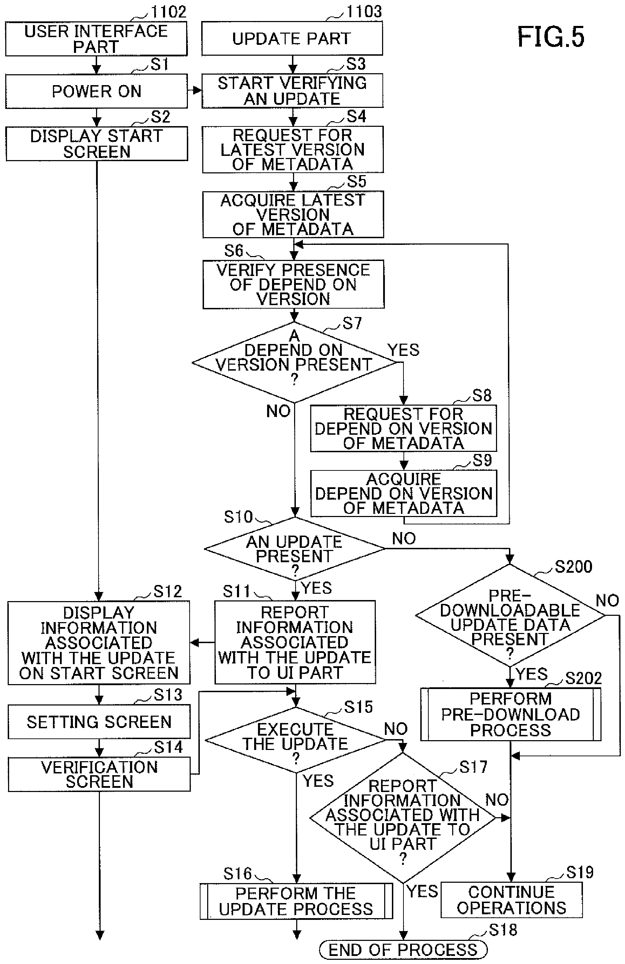

The update part 1103 is configured to control updating of programs 104 or various types of setting information stored in the storage part 105 and execute the update based on associated information (metadata) associated with updates acquired from the update server 60. The updating executed by the update part 1103 will be described in detail in the later-described update process (step S16 of FIG. 5).

The data verifier 1106 serves as a functional part configured to verify whether the update data have been changed in the update server 60 using file identification information. The file identification information is used for determining whether the update data have been changed. It is preferable that the file identification information be generated from the update data and be a single item for each update data item. In the present embodiment, a hash value is used as the file identification information. Specifically, the data verifier 1106 compares file identification information of the update data before the update executable date stored in the storage part 105 with file identification included in the information associated with the update data of the update data previously acquired by the transmitter-receiver 1101. As a result of the comparison, when two of the file identification information items do not match, the data verifier 1106 determines that the update data have not been changed in the update server 60, transmits a report of the comparison result to the transmitter-receiver 1101, and reacquires the update data.

The transmitter-receiver 601 is configured to transmit data to or receive data from the phone terminal 11 via the communication network 2. Specifically, the transmitter-receiver 601 is configured to transmit data to or receive data from the phone terminal 11 by starting a communication session using a predetermined protocol in response to a request from the phone terminal 11 via the communication network 2.

The update data providing part 602 is configured to provide the phone terminal 11 with information associated with updates managed by the update server 60 in response to a request from the phone terminal 11 to which the transmitter-receiver 601 transmits data or from which the transmitter-receiver 601 receives data.

As illustrated in FIG. 5, the user interface part 1102 supplies power to the phone terminal 11 (step S1) based on an operation on a power supply switch or the like of the operation part 108, and displays a start screen on the display 13 (step S2). The start screen is a display screen presenting a list of calling status of each of the phone terminals 11 obtained as a result of transmitting the inquires to the communication management server 50 under control of the CPU 101 (details will be described later).

The update part 1103 starts verifying an update of the own phone terminal at the start after power is supplied in step S1 (step S3). Note that the update of the phone apparatus includes updating the programs and updating various types of setting information.

When the update part 1103 starts verifying the update, the update part 1103 causes the transmitter-receiver 1101 to transmit a request to the update server 60 to provide the update part 1103 with metadata of the latest version of the programs (step S4), and the update part 1103 acquires the metadata provided by the update data providing part 602 in response to the request (step S5).

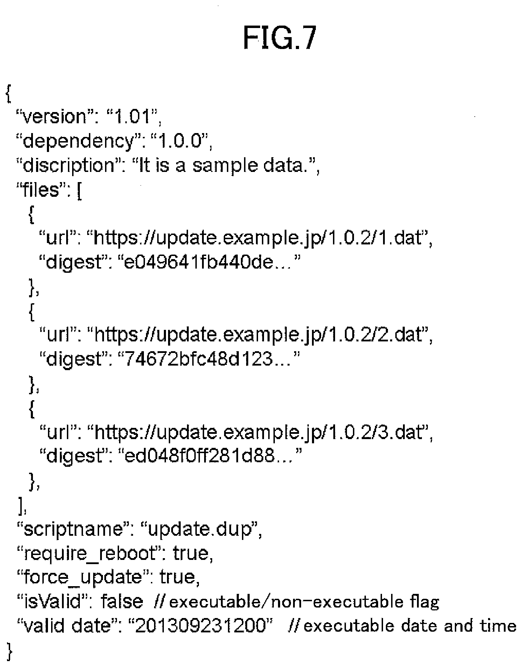

Here, an illustration of the metadata is given. The metadata includes metadata of the executable update data and metadata of update data that may be downloaded before the update executable date. FIG. 7 illustrates an example of metadata. The metadata in FIG. 7 includes "version", "dependency", "description", "files", "scriptname", "require_reboot", "force_update", "isValid", and "validdate".

The "version" indicates a version number such as "1.0.1". The "dependency" indicates another version number such as "1.0.0" that is depended on by the version number of the above "version". That is, versions having dependency on the version number of the "version" may be traced by checking the version number of the "dependency". The "description" indicates detailed information of the update data such as "Itissampledata.". The "files" include a list of programs (data files) that are update entities managed by the update server 60, URL information indicating storing destinations of the data files, and identification information of the data files. In an example in FIG. 7, a hash value is used as the file identification information. The "digest" includes a setting of the hash value. Accordingly, the update part 1103 may be able to execute an update associated with the version illustrated in the meta data by causing the transmitter-receiver 1101 to acquire the data files based on contents described in data items of the "files". Further, the update part 1103 may be able to cause the data verifier 1106 to determine whether the data files have been changed based on the "digest" included in the "files". The "scriptname" includes a script name to be executed when the update is executed. The "require reboot" includes a flag ("true" or "false") indicating whether to reboot the apparatus after the update is executed. The "force_update" includes a flag ("true" or "false") indicating whether the update is a forced update. The "isValid" includes a flag ("true" or "false") indicating whether the update data are executable. The "validdate" includes date and time where the update data are allowed to be executed.

Some of the updates of the programs 104 are associated with device control such as the network I/F 111, the imaging device I/F 112, the sound output I/F 113, the display I/F 114, and the like. The "true" is described in the "require_reboot" since such device control updates may require rebooting after updating. Further, updating the programs 104 includes normal updating and forced updating, and the "true" is described in the "force_update" when updating the programs 104 is to be forced.

Subsequently, the update part 1103 verifies whether there are depended-on versions based on the contents described in a data item of the "dependency" of the acquired metadata (step S6). For example, when the data item of the "dependency" describes a version number indicating a different number such as "1.0.0" as illustrated in FIG. 7, the update part 1103 verifies that there is a depended-on version. Further, when there is no statement described in the data item of the "dependency", the update part 1103 verifies that there is no depended-on version.

Subsequently, the update part 1103 determines whether there is a depended-on version as a result of the verification in step S6 (step S7). When there is a depended-on version ("YES" in step S7), the update part 1103 causes the transmitter-receiver 1101 to transmit a request for acquiring metadata of the depended-on version of the program to the update server 60 (step S8). Then, the update part 1103 acquires the depended-on version of the metadata provided by the update data providing part 602 in response to the request (step S9), and proceeds with the process in step S6. Hence, the update part 1103 sequentially traces the depended-on versions with respect to the latest version and acquires the metadata associated with the traced depended-on version.

Subsequently, the update part 1103 determines whether there is an executable update of the own phone terminal by comparing a version number described in the "version" of the latest version of the metadata in which "true" is set at the "isValid" and a version number of a program 104 stored in the storage part of the own apparatus (step S10). Specifically, when the version number of the latest version matches the version number of the program 104 to indicate that the program 104 is the latest version, the update part 1103 determines that there is no executable update.

Specifically, when the version number of the latest version matches the version number of a program 104 to indicate that the program 104 is the latest version, the update part 1103 determines that there is no executable update.

When the update part 1103 determines that there is no executable update (NO in step S10), the update part 1103 verifies whether there are pre-downloadable update data (step S200). In this step, the update part 1103 determines whether there are pre-downloadable update data based on whether "false" is set at the "isValid" of the metadata.

When the update part 1103 determines that there are no pre-downloadable update data (NO in step S200) indicating that there is no need to perform a pre-download process and execute an update in advance, the phone terminal 11 continues to perform normal operations (step S19). Further, when the update part 1103 determines that there are pre-downloadable update data (YES in step S200), the update part 1103 performs the pre-download process (step S202), and the phone terminal 11 then continues to perform normal operations (step S19).

In the following, an illustration is given of the pre-download process performed by the phone terminal 11.

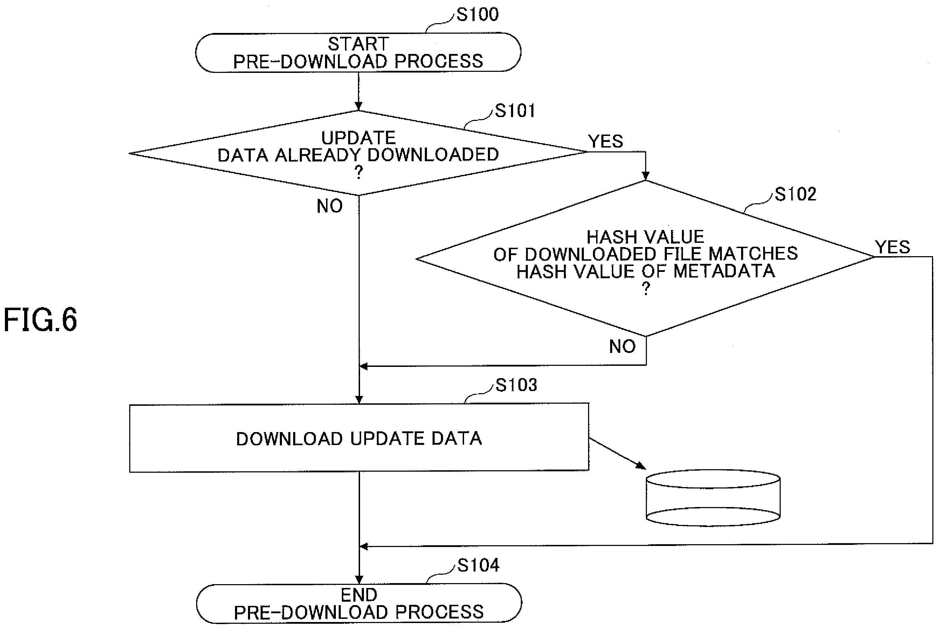

FIG. 6 is a flowchart of the pre-download process performed by the phone terminal 11 when there are pre-downloadable update data. The phone terminal 11 receives the metadata illustrated in FIG. 7, and determines the file identification information being the hash value.

Initially, when the phone terminal 11 verifies that there are pre-downloadable update data based on the metadata acquired from the update server 60, the phone terminal 11 starts a process associated with the pre-download illustrated in FIG. 6 (step S100). The phone terminal determines whether the update data are stored in the storage part 105 (step S101). As an example, the phone terminal 11 may determine whether the update data are stored in the storage part 105 based on whether there is a file having a file name described in the metadata of the corresponding update data in the storage part 105 of the phone terminal 11.

When the phone terminal 11 does not have the update data (NO in step S101), the phone terminal 11 transmits a request for downloading the corresponding update data to the server 60 (step S103). After acquiring the update data, the phone terminal 11 will end the pre-download process (step S104).

On the other hand, when the phone terminal 11 has the update data (YES in step S101), the phone terminal 11 verifies whether a hash value of the downloaded file matches a hash value included in the metadata of the identical version of the update data acquired in step S5 in FIG. 5 (step S102). When the hash value of the downloaded file matches the hash value of the metadata (YES in step S102), the phone terminal 11 will end the pre-download process (step S104). On the other hand, when the hash value of the downloaded file does not match the hash value of the metadata (NO in step S102), the phone terminal 11 discards the update data stored in the storage part 105, and starts downloading the update data again (step S103). After having downloaded the update data, the phone terminal 11 will end the pre-download process (step S104).

Specifically, the communication apparatus (phone terminal) 11 determines whether the update data stored in the update server 60 has been changed by comparing the hash value of the update data stored in the storage part 105 with the hash value included in the metadata acquired in step S5 of FIG. 5, and determines whether the update data needs to be reacquired.

Referring back to FIG. 5, when there is an update of the own phone terminal (YES in step S10), the update part 1103 reports the information associated with the update to the user interface part 1102 (step S11). Specifically, the update part 1103 reports data items other than those unnecessary for reporting to the user such as "Files", "scriptname", and the like among the metadata having the latest version and depended-on versions depended on by the latest version to the user interface part 1102.

The user reporting part 1104 of the user interface part 1102 reports to the user an indication that there are update data necessary for the own phone terminal based on the information associated with the update (step SI2). Note that the information associated with the update is reported by the update part 1103 in step S11 by displaying the indication on a start screen of the display 13.

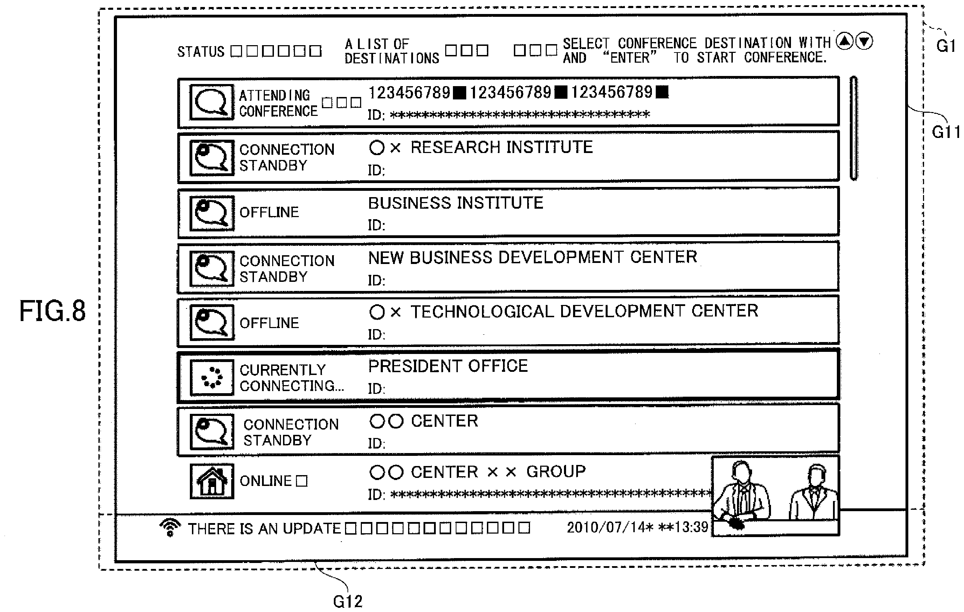

In the following, illustration is given of the start screen. FIG. 8 is a schematic diagram illustrating an example of the start screen G1. As illustrated in FIG. 8, the start screen G1 is configured to include a main screen G11 displaying a list of calling statuses of the phone terminals, and a status screen G12 displaying a status of the own phone terminal. When information associated with the update is reported from the update part 1103, the user reporting part 1104 reports to the user an indication that there is an update by displaying the indication on the status screen G12. Note that the indication that there is an update is not limited to a layout illustrated in FIG. 8, and the indication may be displayed with a predetermined icon image on the main screen G11. Note that in the example of the start screen illustrated in FIG. 8, parts illustrated as outline squares or solidly filled squares represent areas that may display messages. Those parts may be predetermined message display areas on the system.

Further, when "true" is described in the "force_update" of the data item included as information associated with the update, the user reporting part 1104 reports to the user an indication that the update present in the own phone terminal is a forced update by displaying the indication on the start screen G1. Specifically, the user reporting part 1104 reports to the user the indication that the update present in the own phone terminal is a forced update by displaying the indication on the status screen G12, or by displaying the list with gray color or the like on the main screen G11 to indicate that operations other than update operations are disabled.

When the operations input receiver 1105 of the user interface 1102 receives an operational instruction to perform various types of settings such as updating as a result reporting the indication to the user in step S12, the user interface part 1102 causes a setting screen to appear on the display 13 (step S13).

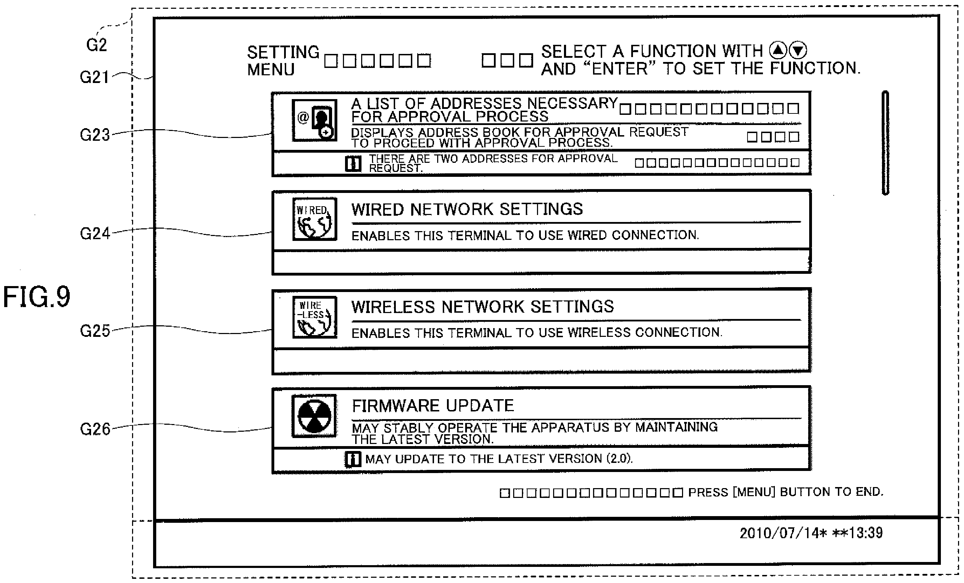

FIG. 9 is a schematic diagram illustrating an example of a setting screen G2. As illustrated in FIG. 9, a setting screen G2 is configured to include a main screen G21 displaying setting buttons G23 to G26 for setting various types of settings on receiving the user's selecting operation via the operations input receiver 1105. The setting button G26 of the setting buttons G23 to G26 is used for executing the update. When the information associated with the update is not reported from the update part 1103 to indicate that the update is not present in the own phone terminal 11, the setting button G26 is displayed with gray color to indicate that the user's selecting operation to select the setting button G26 is disabled. By contrast, when the information associated with the update is reported from the update part 1103 to indicate that the update is present in the own phone terminal 11, the gray out display (i.e., a gray out graphical control element) is cancelled to enable the operations input receiver 1105 to receive the user's selecting operation. In this case, the version number of the latest version subject to updating may be described in the setting button G26 based on the statement of the "version" of the data item included as information associated with the update. In this example, the version number is updated to the latest version 2.0. Note that the setting screen G2 may further be configured to include a status screen to display a status of the own phone terminal.

In step S13, when the user selects the setting button G26, the user interface part 1102 causes the display 13 to display a verification screen for the user to verify the execution of the update (step S14).

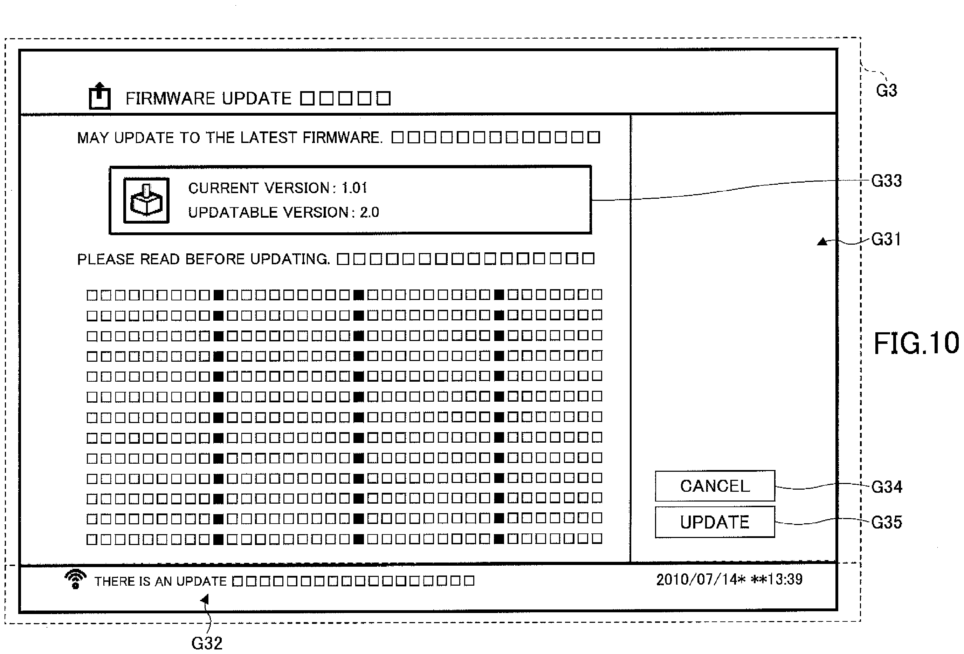

FIG. 10 is a schematic diagram illustrating an example of a verification screen G3. As illustrated in FIG. 10, the verification screen G3 is configured to include a main screen G31 including an update display G33 to display contents of an update to be executed, operation buttons G34 and G35 to receive an instruction to execute the update based on the displayed contents or an instruction to cancel the update, and a status screen G32 to display a status of the own phone terminal. The update display G33 displays information such as the version number of the latest version subject to updating based on the current version number of the program 104 and the statement of the "version" of the data item included as information associated with the update to report the displayed information to the user. Hence, the user may be able to verify the version number to which the current version of the program is updated based on displayed content of the update display G33. Note that the update display G33 of the verification screen G3 may further be configured to display information as to whether to restart the own phone terminal.

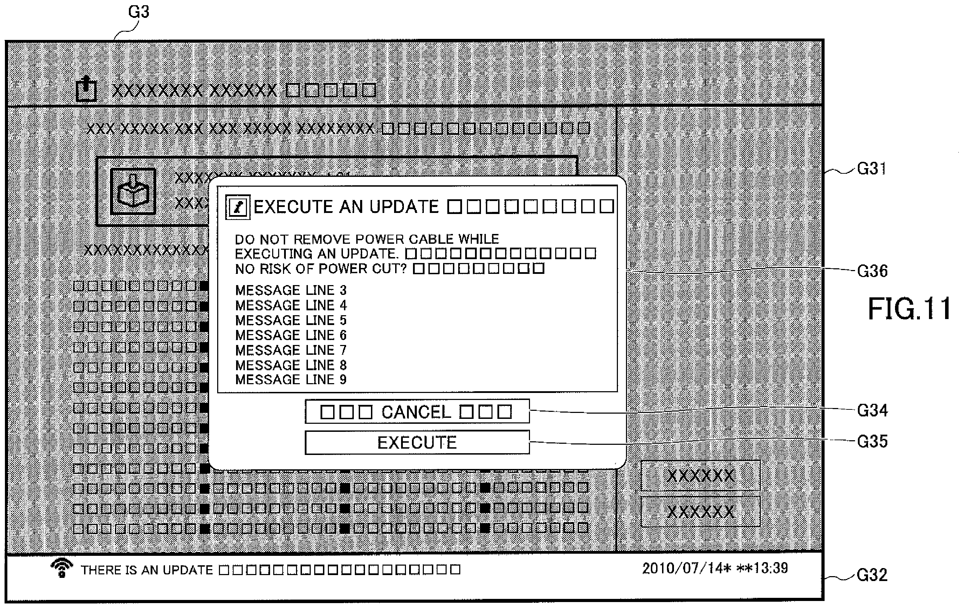

FIG. 11 is a schematic diagram illustrating an example of a verification window G36. The verification screen G3 may further display the verification window G36 to encourage the user to verify the displayed content when the user selects the operation button G35 to give an instruction to execute an update. The verification window G36 may display a notice and the like when a predetermined update is executed in addition to information such as the version number of the latest version subject to updating. In the verification screen G3, when the execution of the update is instructed, the verification window G36 may be displayed to attract the user's attention to execute the update. Note that the verification screen G3 may further be configured to display information as to whether to restart the own phone terminal.

Referring back to FIG. 5, the update part 1103 determines whether to execute an update based on the user's selecting operation to select the operation button G34 or G35 on the verification screen G3 (step S15). When the user selects the operation button G35 to give an instruction to execute the update (YES in step S15), the update part 1103 executes an update process based on the acquired metadata (step S16).

When the operation button G35 is not selected by the user selecting the operation button G34 to cancel the execution of the update (NO in step S15), the update part 1103 determines whether there is a forced update among the unexecuted updates based on the statement of the "force_update of the acquired metadata (step S17). When there is a forced update (YES in step S17), the update part 1103 ends the process of the own phone terminal 11 (step S18) to switch off the own phone terminal. As described above, when the forced update is not executed, he own phone terminal 11 will not be able to even call. Hence, undesirable operations may be prevented by switching off the power of the phone terminal 11. Conversely, when the forced update is not contained (NO in step S17), the update part 1103 will not execute the update at that time, and the phone terminal 11 continues to perform normal operations. Hence, the user may be able to prioritize calling rather than updating.

That is, in the phone terminal 11, when there is an update of the own phone terminal 11, the presence of the update is reported to the user from the user reporting part 1104 of the user interface part 1102. Then, the phone terminal 1 1 receives from the user the selecting operation via the operation input receiver 1105 as to whether to execute that update. When the user performs the selecting operation to execute the update, the update part 1103 executes the update process. Accordingly, when there is an update to be executed in the own phone terminal 11, the phone terminal 11 allows the user to select the execution of that update.

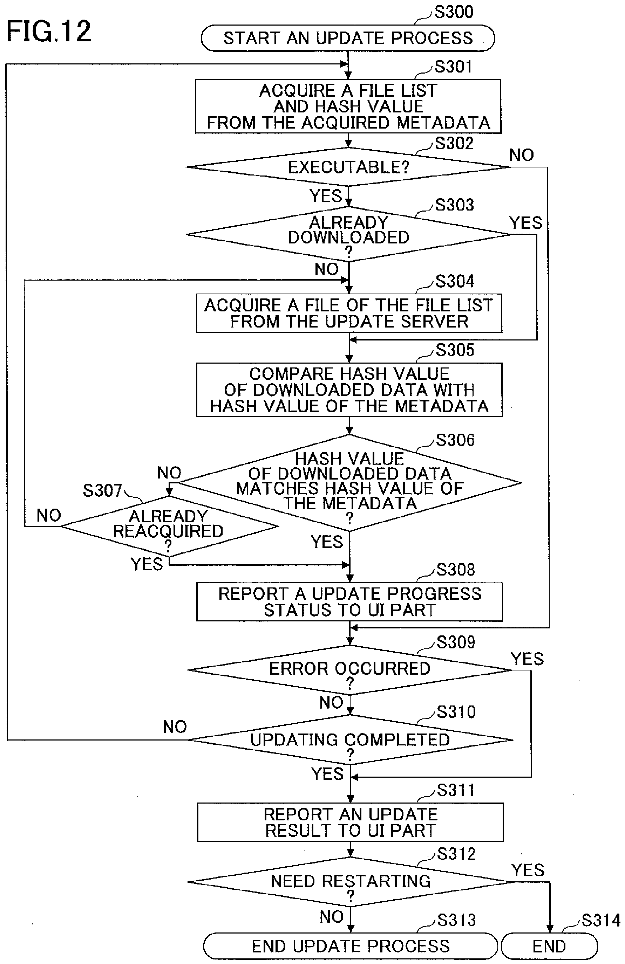

In the following, a detailed description is given of the update process (step S16). FIG. 12 is a diagram illustrating an example of the update process executed by the phone terminal 11. Similar to FIG. 6, in FIG. 12, the phone terminal 11 receives the metadata having a configuration similar to that illustrated in FIG. 7 and the file identification information is a hash value.

As illustrated in FIG. 12, when the update part 1103 starts an update process (step S300), the update part 1103 deactivates functions of interface parts such as the imaging device I/F 112, the sound input-output I/F 113 and the like used for connecting to external apparatuses such as the camera 12 and the microphone 14. When the interface parts are in activation, the programs 104 associated with the interface parts are being used while updating. Hence, an error may occur to cause failure of the update process. Accordingly, the update part 1103 deactivates the functions of the above-described interface parts along with the start of the update process.

Subsequently, the update part 1103 acquires a file list of the programs serving as an entity of the update from the "files" of all the acquired metadata (step S301). Note that when the update part 1103 acquires several depended-on versions of the metadata, steps S301 to S310 are performed on the metadata in the order from the oldest version to the latest version.

Subsequently, the update part 1103 determines whether the update is executable based on the "isValid" of the metadata (step S302). For example, the update part 1103 compares a current time acquired from a network time protocol (NTP) server with a time described in the "validdate", and when found that the time in the "validdate" is an earlier time, the update part 1103 replaces the flag with "true" and determines that the update is executable.

When the update part 1103 determines that the update is not executable (NO in step S302), the update part 1103 proceeds with a process in step S310, and reports to the user interface part 1102 an indication that the update is not executable. On the other hand, when the update part 1103 determines that the update is executable (YES in step S302), the update part 1103 determines whether those update data are already acquired in the pre-download process (step S303).

When the update data are already acquired in the pre-download process (YES in step S303), the update part 1103 compares the hash value computed from the pre-downloaded file with the hash value included in the metadata corresponding to the update data acquired in the pre-download process (step S305). The update part 1103 determines whether the hash value computed from the pre-downloaded file matches the hash value included in the metadata by comparing the two hash values (step S306). When the two hash values match (YES in step S306), the update part 1103 executes the update, and reports an update progress status to the user interface part 1102 (step S308). When the two hash values do not match (NO in step S306), the update part 1103 verifies whether the update data stored in the storage part 105 of the phone terminal 11 are reacquired update data (step S307). Specifically, the update part 1103 verifies that the pre-downloaded update data are discarded after the start of the update process in step S300 and the update data are reacquired in step S304. When the update part 1103 determines that the update data are not reacquired ones (NO in step S307), the update part 1103 proceeds with the process in step S304 to reacquire the update data. That is, since the update data included in the metadata corresponding to the update data acquired in the pre-download process have been changed, the phone terminal 11 reacquires the corresponding update data from the update server 60.

On the other hand, when the update data are reacquired ones (YES in step S307), the update part 1103 determines that an error has occurred, and proceeds with a process in step S308. As an example where the hash values do not match after reacquiring the update data, the update data in the update server 60 themselves may have defects.

When the update part 1103 has not pre-downloaded the update data (NO in step S303), the update part 1103 acquires a file described in the acquired metadata from the update server 60. After the acquisition of the file, the update part 1103 proceeds with processes in steps S305 to S307 in a manner similar to a case where the update data are already acquired in the pre-download process (YES in step S303). Note that one of the factors causing the hash values not to match may be a communications error during downloading. Hence, the phone terminal 11 performs reacquisition of the update data only once. When the hash values do not match after the reacquisition, the update part 1103 determines that an error has occurred similar to the case where the update data are already acquired in the pre-download process and proceeds with a process in step S308.

Subsequently, the update part 1103 reports the update progress status to the user interface part 1102 (step S308). The update progress status report indicates for which files, among the files included in the file list, the update part 1103 has completed the processes in steps S305 to S307. Further, when the update part 1103 executes updates of several versions having dependent relationships, the update progress status report may indicate for which versions the update part 1103 has completed updating. The user interface part 1102 displays the reported update progress status on the screen of the display 13 to report to the user the reported update progress status.

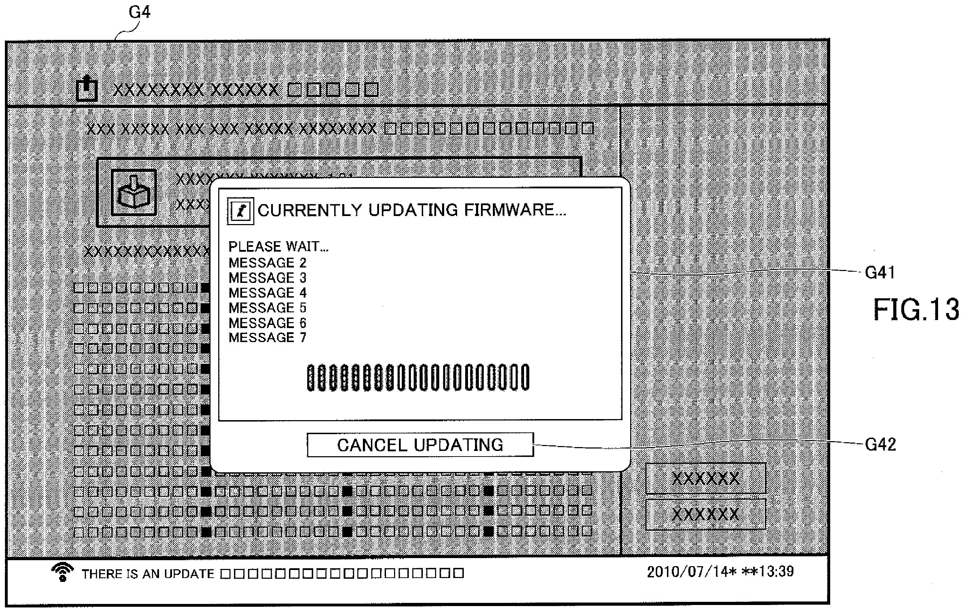

FIG. 13 is a schematic diagram illustrating an example of an update screen G4. As illustrated in FIG. 13, the update screen G4 is displayed on the display 13 by the user interface part 1102 during the update process executed by the update part 1103. The update screen G4 is configured to display an update status window G41 to display the update progress status reported by the update part 1103, and an operation button G42 for the user to give an instruction to cancel the update process. The user may be able to check the update progress status based on the displayed content of the update status window G41.

Note that the update screen G4 may further be configured to display a remaining time of update process or a current line speed on a real-time basis. In this case, the user may be provided with advantage to acknowledge the update status in more detail.

Subsequently, the update part 1103 determines whether an error has occurred (step S309). When the update part 1103 determines that an error has occurred (YES in step S309), the update part 1103 exits a process of steps S301 to S309 to proceed with step S310. In step S309, the update part 1103 determines as an error such as an error occurring due to any of the factors during updating (e.g., unmatched file identification information in step S306), cancelling the updating by pressing the operation button G42 on the update screen G4, and restarting required by the version that has been updated. Accordingly, when the update is executed from the earlier version to the latest version, the process of steps S301 to S309 is exited at the stage where the version that requires restarting has been updated.

When no error has occurred (NO in step S309), the update part 1103 determines whether the updates of all the versions associated with the acquired metadata have been completed (step S310). When the update part 1103 determines that the updates of all the versions have not been completed (NO instep S310), the update part 1103 returns to step S301 to continue to perform the update process. When the update part 1103 determines that the updates of all the versions have been completed (YES instep S310), the update part 1103 exits the process of steps S301 to S310 to proceed with step S311.

In step S311, the update part 1103 reports a result of the updating in step S301 to S310 to the user interface part 1102. The user interface part 1102 displays the reported update result on the screen of the display 13 to report to the user the reported update result.

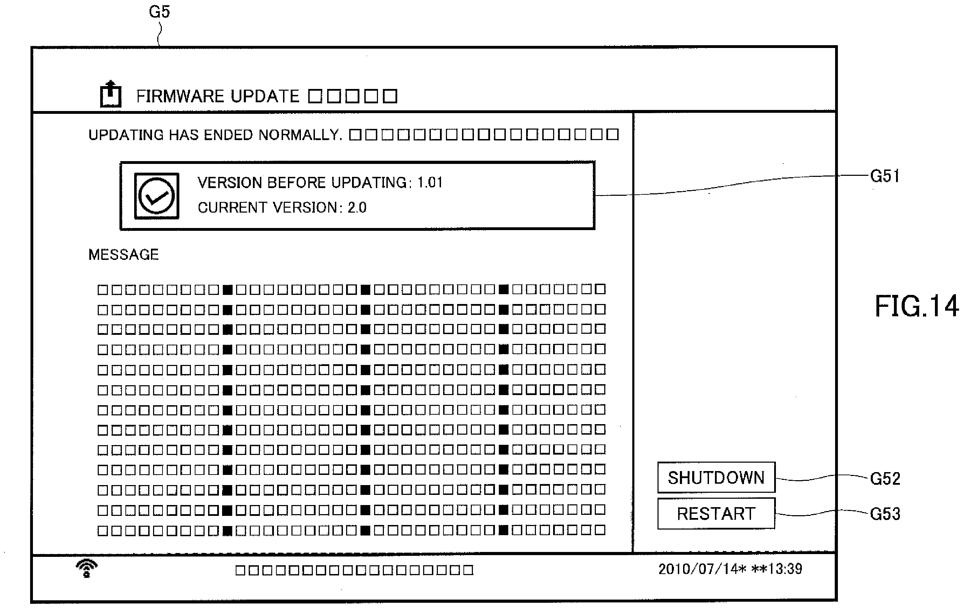

FIG. 14 is a schematic diagram illustrating an example of a verification screen G5. The user interface part 1102 that has received the update result displays on the verification screen G5, as illustrated in FIG. 14, an update result G51 obtained as a result of steps S301 to S310 or operation buttons G52 and G53 for receiving a shutdown operation or a restarting operation after the execution of the update. The update result G51 displays information associated with the version before updating, or information associated with the current version obtained as a result of steps S301 to S310. The user may be able to check the update result based on the display content of the update result G51.

Subsequently, the update part 1103 determines whether restarting is required based on the statement of the "require_reboot" included in the metadata when the update is executed in steps S301 to S310 (step S311). When the update part 1103 determines that restarting is not required (NO in step S312), the update part 1103 ends the update process without restarting (step S313). When the update part 1103 determines that restarting is required (YES in step S312), the update part 1103 ends the process with restarting (step S314). As described above, when the update that requires restarting is executed, the own phone terminal will be restarted without the user's operation after the update has been executed.

As described above, the this embodiment, the phone terminal 11 may be able to reacquire the update data. Hence, when the update server 60 corrects a relatively minor defect, the update server 60 does not need to manage update data for correcting the minor defect as a new version, and may simply replace the update data with corrected ones. Further, since the update server 60 is able to simply replace the update data with corrected ones, it is possible to prevent a problem caused by the update data having a defect.

Specifically, the communication system 1 may be a telephone system such as a videophone system, an audio teleconference system, a voice call system, a personal computer (PC) screen sharing system, an Internet protocol (IP) phone system, an Internet phone system, or the like. Further, the communication system 1 may be a remote control system such as a car navigation system. For example, in the car navigation system, one of the phone terminals 11 corresponds to a car navigation apparatus installed on a vehicle, and the other one of the phone terminals 11 corresponds to a management server or a management terminal in a management center that manages the car navigation, or another car navigation apparatus installed on another vehicle. In addition, the communication system 1 may be a content delivery system to deliver electronic data such as images in a movie, a drama, the television and the posted video, and electronic books.

Moreover, the communication management server 50 and the update server 60 in the above embodiments may be formed in a single computer or a plurality of computers to which respective functions and components are appropriately assigned. In addition, when the update server 60 is formed of a single computer, programs transmitted by the update server 60 may be divided into a plurality of modules or the programs may be transmitted without being divided. Further, when the update server 60 is formed of a plurality of computers, the programs may be divided into a plurality of modules and each of the modules may be transmitted from a corresponding one of the computers.

According to the disclosures, the phone terminal may be able to reacquire the update data.

The present application is based and claims priority of Japanese Priority Application No. 2013-233765 filed on November 12, 2013.

## Claims

1. A communication apparatus (11) operable to perform communications via a data transmission path (2), the communication apparatus (11) comprising:
a receiver (1101) configured to receive meta-information having statements associated with an update;
a determination part (1106) configured to determine whether the update data have been changed based on the meta-information received by the receiver when the update data have already been downloaded;
an acquisition part configured to download, when the determination part determines that the update data have been changed, the changed update data; and
an update part (1103) configured to execute the update based on the changed update data downloaded by the acquisition part,
wherein the meta-information includes meta-information of executable update data and meta-information of update data that may be downloaded before an update executable date.

2. The communication apparatus (11) as claimed in claim 1, wherein
the meta-information includes file identification information used to determine whether the update data have been changed.

3. The communication apparatus (11) as claimed in claim 2, further comprising:
a generator configured to generate the file identification information from the update data, wherein
the determination part (1106) determines whether the update data are changed by comparing the file identification information generated by the generator with the file identification information included in the meta-information received by the receiver.

4. A communication system (1) comprising:
an update information providing apparatus (60); and
the communication apparatus (11) according to any one of the preceding claims, the update information providing apparatus (60) and the communication apparatus (11) being in communication with each other via a data transmission channel, wherein the update information providing apparatus (60) includes
a transmitter configured to transmit or receive update information with respect to the communication apparatus (11), and
an update data providing part configured to provide the communication apparatus (11) with update data in response to a request from the communication apparatus (11).

5. A communication method performed by a communication apparatus (11) capable of performing communications via a data transmission channel, the communication method comprising:
receiving (S5) meta-information having statements associated with an update;
determining (S102) whether the update data have been changed based on the received meta-information when the update data have already been downloaded;
downloading (S103), when it is determined that the update data have been changed, the changed update data; and
executing (S16) the update based on the downloaded changed update data,
wherein the meta-information includes meta-information of executable update data and meta-information of update data that may be downloaded before an update executable date.

6. A non-transitory computer readable recording medium having a communication program executed by a computer, the computer being included in a communication apparatus (11) capable of performing communications via a data transmission channel, wherein when executed by the computer, the communication program performs the method according to the preceding claim.

## Patentansprüche

1. Kommunikationsvorrichtung (11), die betreibbar ist, Kommunikationen über einen Datenübertragungsweg (2) auszuführen, wobei die Kommunikationsvorrichtung (11) Folgendes umfasst:
einen Empfänger (1101), der konfiguriert ist, Meta-Informationen mit Erklärungen, die einer Aktualisierung zugeordnet sind, zu empfangen;
einen Bestimmungsabschnitt (1106), der konfiguriert ist, anhand der durch den Empfänger empfangenen Meta-Informationen zu bestimmen, ob die Aktualisierungsdaten geändert wurden, wenn die Aktualisierungsdaten bereits heruntergeladen wurden;
einen Erfassungsabschnitt, der konfiguriert ist, dann, wenn der Bestimmungsabschnitt bestimmt, dass die Aktualisierungsdaten geändert wurden, die geänderten Aktualisierungsdaten herunterzuladen; und
einen Aktualisierungsabschnitt (1103), der konfiguriert ist, die Aktualisierung anhand der geänderten Aktualisierungsdaten, die durch den Erfassungsabschnitt heruntergeladen wurden, auszuführen,
wobei die Meta-Informationen Meta-Informationen von ausführbaren Aktualisierungsdaten und Meta-Informationen von Aktualisierungsdaten, die vor einem Aktualisierungsausführdatum heruntergeladen werden können, enthalten.

2. Kommunikationsvorrichtung (11) nach Anspruch 1, wobei
die Meta-Informationen Dateiidentifikationsinformationen enthalten, die verwendet werden, um zu bestimmen, ob die Aktualisierungsdaten geändert wurden.

3. Kommunikationsvorrichtung (11) nach Anspruch 2, die ferner umfasst:
einen Generator, der konfiguriert ist, die Dateiidentifikationsinformationen aus den Aktualisierungsdaten zu erzeugen, wobei
der Bestimmungsabschnitt (1106) durch Vergleichen der durch den Generator erzeugten Dateiidentifikationsinformationen mit den Dateiidentifikationsinformationen, die in den durch den Empfänger empfangenen Meta-Informationen enthalten sind, bestimmt, ob die Aktualisierungsdaten geändert wurden.

4. Kommunikationssystem (1), das Folgendes umfasst:
eine Aktualisierungsinformationsliefervorrichtung (60); und
die Kommunikationsvorrichtung (11) nach einem der vorhergehenden Ansprüche, wobei die Aktualisierungsinformationsliefervorrichtung (60) und die Kommunikationsvorrichtung (11) miteinander über einen Datenübertragungskanal in Kommunikation sind, wobei die Aktualisierungsinformationsliefervorrichtung (60) enthält:
einen Sender, der konfiguriert ist, Aktualisierungsinformationen in Bezug auf die Kommunikationsvorrichtung (11) zu senden oder zu empfangen, und
einen Aktualisierungsdatenlieferabschnitt, der konfiguriert ist, die Kommunikationsvorrichtung (11) mit Aktualisierungsdaten als Reaktion auf eine Anforderung von der Kommunikationsvorrichtung (11) zu versorgen.

5. Kommunikationsverfahren, das durch eine Kommunikationsvorrichtung (11) ausgeführt wird, die Kommunikationen über einen Datenübertragungskanal ausführen kann, wobei das Kommunikationsverfahren umfasst:
Empfangen (S5) von Meta-Informationen mit Erklärungen, die einer Aktualisierung zugeordnet sind;
Bestimmen (S102), ob die Aktualisierungsdaten geändert wurden, anhand der empfangenen Meta-Informationen, wenn die Aktualisierungsdaten bereits heruntergeladen wurden;
Herunterladen (S103) dann, wenn bestimmt wird, dass die Aktualisierungsdaten geändert wurden, der geänderten Aktualisierungsdaten; und
Ausführen (S16) der Aktualisierung anhand der heruntergeladenen geänderten Aktualisierungsdaten,
wobei die Meta-Informationen Meta-Informationen ausführbarer Aktualisierungsdaten und Meta-Informationen von Aktualisierungsdaten, die vor einem Aktualisierungsausführdatum heruntergeladen werden können, enthalten.

6. Nicht transitorisches computerlesbares Aufzeichnungsmedium mit einem Kommunikationsprogramm, das durch einen Computer ausgeführt wird, wobei der Computer in einer Kommunikationsvorrichtung (11) enthalten ist, die Kommunikationen über einen Datenübertragungskanal ausführen kann, wobei das Kommunikationsprogramm dann, wenn es durch den Computer ausgeführt wird, das Verfahren nach dem vorhergehenden Anspruch ausführt.

## Revendications

1. Appareil de communication (11) conçu pour effectuer des communications par le biais d'un trajet de transmission de données (2), l'appareil de communication (11) comprenant :
un récepteur (1101) conçu pour recevoir des méta-informations comportant des énoncés associés à une mise à jour ;
une partie de détermination (1106) conçue pour déterminer si les données de mise à jour ont été modifiées en fonction des méta-informations reçues par le récepteur lorsque les données de mise à jour ont déjà été téléchargées ;
une partie d'acquisition conçue pour télécharger, lorsque la partie de détermination détermine que les données de mise à jour ont été modifiées, les données de mise à jour modifiées ; et
une partie de mise à jour (1103) conçue pour effectuer la mise à jour en fonction des données de mise à jour modifiées téléchargées par la partie d'acquisition,
dans lequel
les méta-informations comprennent des méta-informations de données de mise à jour exécutable et des méta-informations de données de mise à jour qui peuvent être téléchargées avant une date exécutable de mise à jour.

2. Appareil de communication (11) tel que défini dans la revendication 1, dans lequel
les méta-informations comprennent des informations d'identification de fichier utilisées pour déterminer si les données de mise à jour ont été modifiées.

3. Appareil de communication (11) tel que défini dans la revendication 2, comprenant en outre :
un générateur conçu pour générer les informations d'identification de fichier à partir des données de mise à jour,
la partie de détermination (1106) déterminant si les données de mise à jour sont modifiées par la comparaison des informations d'identification de fichier générées par le générateur aux informations d'identification de fichier comprises dans les méta-informations reçues par le récepteur.

4. Système de communication (1) comprenant :
un appareil de fourniture d'informations de mise à jour (60) ; et
l'appareil de communication (11) selon l'une quelconque des revendications précédentes, l'appareil de fourniture d'informations de mise à jour (60) et l'appareil de communication (11) étant en communication l'un avec l'autre par le biais d'un canal de transmission de données, l'appareil de fourniture d'informations de mise à jour (60) comprenant
un émetteur conçu pour émettre ou recevoir des informations de mise à jour par rapport à l'appareil de communication (11), et
une partie de fourniture de données de mise à jour conçue pour fournir à l'appareil de communication (11) des données de mise à jour en réponse à une demande de la part de l'appareil de communication (11).

5. Procédé de communication effectué par un appareil de communication (11) capable d'effectuer des communications par le biais d'un canal de transmission de données, le procédé de communication comprenant :
la réception (S5) de méta-informations comportant des énoncés associés à une mise à jour ;
la détermination (S102) de savoir si les données de mise à jour ont été modifiées en fonction des méta-informations reçues lorsque les données de mise à jour ont déjà été téléchargées ;
le téléchargement (S 103), lorsque l'on a déterminé que les données de mise à jour ont été modifiées, des données de mise à jour modifiées ; et
l'exécution (S16) de la mise à jour en fonction des données de mise à jour modifiées téléchargées,
dans lequel
les méta-informations comprennent des méta-informations de données de mise à jour exécutable et des méta-informations de données de mise à jour qui peuvent être téléchargées avant une date exécutable de mise à jour.

6. Support d'enregistrement lisible par ordinateur non transitoire comportant un programme de communication exécuté par un ordinateur, l'ordinateur étant compris dans un appareil de communication (11) capable d'effectuer des communications par le biais d'un canal de transmission de données, dans lequel lorsqu'exécuté par l'ordinateur, le programme de communication effectue le procédé selon la revendication précédente.
